# EUROPÄISCHE PATENTSCHRIFT

(11) **EP 0 324 194 B1**
(45) Veröffentlichungstag und Bekanntmachung des Hinweises auf die Patenterteilung: **20.10.1993**
(21) Anmeldenummer: 88200097.9
(22) Anmeldetag: 12.01.1988
(51) Int. Cl.: B23K 35/363

(54) **Verfahren zur Herstellung von elektronischen Komponenten unter Verwendung eines Weichlötflussmittels auf Carbonsäurebasis**
Process for manufacturing electronic components using a carboxylic acid based soldering flux
Procédé pour la fabrication d'éléments électroniques en utilisant un flux de soudage tendre à base d'acides carboxyliques

(43) Veröffentlichungstag der Anmeldung: 19.07.1989
(73) Patentinhaber: KERNER, Rudolf A., D-86567 Hilgertshausen (DE)
(72) Erfinder: KERNER, Rudolf A., D-86567 Hilgertshausen (DE)
(74) Vertreter: Grünecker, Kinkeldey, Stockmair & Schwanhäusser Anwaltssozietät

(56) Entgegenhaltungen:
- WO-A-85/05307
- WO-A-86/00844
- DE-A- 2 114 927
- FR-A- 2 109 689

## Beschreibung

Die Erfindung betrifft ein Verfahren zur Herstellung von elektrischen und elektronischen Komponenten, insbesondere von mit Bauelementen bestückten gedruckten Schaltungen durch Weichlöten mittels Lötmaschinen unter Verwendung eines Weichlötflussmittels auf Carbonsäurebasis, das in der Elektronik- und Elektroindustrie eingesetzt wird.

Weichlötflussmittel auf der Basis von organischen Carbonsäuren sind bekannt. In Bezug auf die Beschreibung der Entwicklung dieser Technologie wird verwiesen auf die PS EP 0215773.

Es zeigte jedoch die vermehrte Einführung von in-cirucit-Test's und SMT-manufacturing, daß ein Flussmittel hierzu erforderlich ist, dessen Rüchstände nach dem Lötprozess nicht mehr entfernt werden brauchen und trotzdem bei den beiden vorbeschriebenen Fertigungstechnolgien einwandfreie Produktionsergebnisse erziehlt werden. Dies wird vorallendingen mit Flussmitteln erreicht, deren Feststoffanteil gegenüber den bisher üblichen deutlich vermindert ist. Die Verminderung des Feststoffanteils wird Vorzugsweise dadurch erreicht, daß der Harzauteil entweder deutlich vermindert, gauz weggelassen oder durch andere substituierende Produkte ersetzt wird. Es wird hierbei Bezug genommen auf die PS DE 2114927, DE 2832317, DE 1608425, DE 2725701, EP 0184825, EP 090960, EP 0077622, EP 0201150, EP 0219175 bzw. US 4,419,146.

Bei einer deutlichen Reduzierung des Feststoffanteils unter Verminderung bzw. Weglassung des Harzanteils vermindert sich aber entsprechend die Ausbreitungs- und Schäumfähigkeit des Flussmittels. Diesem physikalischen Negativeffekt wurde bisher entgegenzuwirken versucht, in dem man als Ausbreitungs- bzw. Schäumkomponente Tenside (z.B. nichtionische, anionische, kationische, amphotere etc.) beigab. doch es zeigte sich bei allen diesen Zuschlagsstoffen ausnahmslos eine mangelnde elektrochemische Dauerzeitstandsfestigkeit.

Ferner zeigte der Lötdampf, also die nach dem Löten von gedruckten Schaltungen bis zur Abkühlung abdampfenden heissen Flussmittelrückstände, durch das Fehlen des abmildernden Harzes eine etwas zu starke physiologische Aktivität. Es war also wünschenswert, einen gleichwertigen Ersatz für die im wesentlichen für die physiologischen Reaktionen verantwortlich Bernsteinsäure zu finden.

Wenn ein halogenfreies Flussmittel ganz ohne Trägerkomponente, also z.B. ohne Harz aufgebaut wird (z.B. wie in PS EP 090960 beschrieben), so entsteht aufgrund der kristallinen Natur der Carbonsäuren ein optisch unattraktives weisses kristallines Rückstandsbild des Flussmittels nach dem Löten. Dies wird (wie bisher auch) verhindert durch Hinzugabe von einer jetzt aber deutlich verminderten Menge an Harz (siehe auch PS EP 0184825).

Im Lichte der vorgehend beschriebene Erfordernisse ergibt sich für ein Flussmittel, das, ohne daß die Rückstände nach dem Löten entfernt zu werden brauchen, für den in-circuit-Test und für SMT-manufacturing geeignet ist, ein optimaler Feststoffanteil von 6 %. Es ist aber jeder andere Feststoffanteil auch möglich.
mit dem nachfolgen beschriebenen neuartigen Weichlötflussmittel, das auf der PS EP 0215773 fusst, lassen sich die genannten elektrochemischen Langzeit- und produktionstechnischen Erfordernisse erreichen.

Es zeigt sich auch hierbei, daß die Verwendung von alicylisehen Carbonsäuren die wesentliche Grundlage unter Hinzunahme von alkylfluorierten Alkoholen der chemischen Strukturformel Rf-CH₂-CH₂-Oh), wobei Rf ein Fluoralkylrest mit 6 bis 16 C-Atomen darstellt, für die Erreichung elektrochemischer Langzeitstablität ist. Bei den alkylfluorierten Alkoholen ist ausnahmslos jede Art von Kettenschnitt geeignet.

Als geeiguetes Substitutionsprodukt für die Bernsteinsäure erwiesen sich die aliphatischen Hydroxi-Carbonsäuren. Die Verwendung von Hydroxi-Carbonsäuren als Flussimittelaktivatoren ist bekannt (z.B. PS DE 2344493, CH 461226, PCT SE 8500291). Es werden jedoch ausschließlich für halogenhaltige Flussmittel insbesondere Zitronensäure, die korrosiv wirkt und thermisch instabil ist, sowie die Weinsäure, die praktisch in herkömmlichen Lösemitteln unlöslich ist, verwendet. Als besonders geeignet für halogenfreie Weichötflussmittel, deren Rückstände nach dem Löten auf den gedruckten Schaltungen verbleiben können, zeigt sich die Äpfelsäure. Natürlich ist nachwievor auch die Bersteinsäure selbst als bewährter Aktivatorzusatz sehr geeignet. Es wird deshalb bei den Beispielen auch hierzu wieder Bezug genommen.

Überraschenderweise zeigt sich auch bei Verwendung des Reagens alicyclische Carbonsäure - alkylfluorierter Alkohol des Typs Rf-CH₂-CH₂-OH eine Geignetheit von aromatischen Carbonsäuren. Insbesondere mehrkernige Verbindungen zeigten sich als geeignet. Auch hydroxilierte Verbindungen sind geeignet. Beispiele für mehrkernige aromatische Carbonsäuren sind Naphtalindicarbonsäure, Naphtalintetracarbonsäure etc. Beispiel für aromatische Hydroxy-Carbonsäuren sind Salicyl-,Hydroxy-Naphtoesäure, HydroxyPhenylessigsäure etc. Es ist somit jede aromatische Carbonsäure oder deren Derivate geeignet, sofern sie nicht im Aktivatorgemisch bei Beaufschlagung von Temperatur, Licht oder Spannung einer thermischen, optischen oder lektrochemischen Umwandlung unterliegt, die für die Funktion von elektronischen Komponenten bedeutsam sein könnte.

Die Hinzunahme vonalkylfluorierten Alkoholen des Typs Rf-CH₂-CH₂-OH, die kein tensidisches Reagens sind, ist natürlich auch für jede sich aus der PS EP 0215773 ergebende Rezepturzusammensetzung möglich. Die Flussmittel können auch mit mehrwertigen modifizierten Alkoholen anstelle von Harz aufgebaut werden.

Mit der Erfindung können Flussmittels für verschiedene Applikationsverfahren aufgebaut werden. Alle nachfolgenden Prozentangaben beziehen sich (soweit nichtanders angegeben) als Gewichtsprozente auf die Gesamtzusammensetzung.
a) Flüssigflussmittel
   Die Anwendung erfolgt vorzugsweise bei automatischen Fliesslötverfahren, wobei die Applikation auf die gedruckten Schaltungen mittels Schaum, Sprayen oder ähnlichem geschieht.
   Hierbei ist das Harz (Anspruch 4 a) in einer Menge von 0,01 - 35 % enthalten. Die geeigneten Harzsorten sind in der PS EP 0215773 vorbeschrieben.
   Die mehrwertigen modifizierten Alkohole mit 2 - 16 C-Atomen (Anspruch 4 b), deren Isomeren und Derivate, insbesondere deren Ester, Ether- und Oxoverbindungen sind mit 0,01 - 90 % enthalten. Die Beispiele sind in der PS EP 0215773 vorbeschrieben.
   Die nachfolgenden Bestandteile des Aktivatorsystems (Anspruch 3) sind entweder mit 0,01 - 25 % oder mit 0 % enthalten.
   Alicyclische Mono-, Di- bzw. Policarbonsäuren mit mindestens einem Kohlenstoffring (Anspruch 3 a) oder deren Derivate.
   Die geeigneten alicyclischen Carbonsäuren sind in der PS EP 0215773 vorbeschrieben.
   Gesättigte aliphatische Monocarbonsäuren mit 12 - 22 C-Atomen (Anspruch 3 b). Beispiele für geeignete Säuren sind in der PS EP 0215773 vorbeschrieben.
   Gesättigte aliphatische Dicarbonsäuren mit 2 - 10 C-Atomen und Policarbonsäuren (Anspruch 3 c). Beispiele für geeignete Säuren sind in der PS EP 0215773 vorbeschrieben.
   Aliphatische Ketocarbonsäuren mit 3 - 5 C-Atomen (Anspruch 3 d). Beispiele für geeignete Säuren sind in der PS EP 0215 773 vorbeschrieben.
   Aliphatische Hydroxy-Carbonsäuren mit 3 - 5 C-Atomen (Anspruch 3 e). Beispiele für geeignet Säuren sind Tartron-, Äpfel-, Wein- und Zitroneusäure, wobei die Äpfelsäure besonders bevorzugt ist.
   Aromatische Mono-, Di- bzw. Policarbonsäuren mit mindestens einem Kohlenstoffring und deren Derivate (Anspruch 3 f). Beispiele für geeignete Säuren sind Benzoe-, Salicyl-, Gallus-, Phenylessig-, Mandel- und Zimtsäure, Phtal-, Terephtal-, Prohnit-, Mellophan-, Pyromellith- und Mellithsäure, Naphtalindi- und Tetracarbonsäure, Hxdroxy-Naphtoesäure etc. Besonders bevorzugt sind Salicyl-, Naphtalindi- und Naphatlintetracarbonsäure, Hydroxy-Naphtoesäure.
   Quartäre Ammoniumsalze mit 4 - 19 C-Atomen (Anspruch 3 g). Beispiele für ein geeignetes Salz sind in der PS EP 0215773 vorbeschrieben.
   Das Wasser ist mit 0,01 - 25 % enthalten (Anspruch 5 a).
   Die alkylfluorierten Alkohole der chemischen Strukturformel Rf-CH₂-CH₂-OH, wobei Rf einen Kettenschnitt von 6 - 16 C-Atomen darstellt, sind mit 0,01 - 4 % enthalten (Anspruch 5 b).
   Es ist ausnahmslos jede Art von Kettenschnitt besonders geeignet. Besonders bevorzugt sind Kettenschnitte mit 6 - 12 C-Atomen.
   Die mit Wasser mischbaren Alkanole oder deren Isomeren mit 2 - 5 C-Atomen (Anspruck 5 c) sind als Rest zu jeweils 100 % der jeweiligen Flussmittelmischung enthalten. Beispile für geeignete Alkanole sind in der PS EP 0215773 vorbeschrieben.
   Mit der Dispergierung von feinteiligem Lot in das Flussmittelsystem kann auch eine Lotpaste erhalten werden (Anspruch 6).
b) Festflussmittel
   Ein derartiges Produkt kann zur Umhüllung von Lotformteilen oder als Füllung von Lotdrähten verwendet werden (Anspruch 7). Für diese Anwednungen entfallen die Komponenten gemäss Anspruch 5 a und 5 c.
   Die nachfolgenden Beispile erläutern die Erfindung.

1. Beispiel
Flüssigflussmittel für automatisches Flisslötverfahren.

| | |
|---|---|
| WW Gum Rosin | 2,4 |
| Isopropanol | 88,0 |
| Wasser | 6,0 |
| Alkylfluorierter Alkohol | 0,3 |
| Cyclohexan-Dicarbonsäure | 0,7 |
| Bersteinsäure | 1,4 |
| Stearinsäure | 1,0 |
| Lävulinsäure | 0,3 |

2. Beispiel
Flüssigflussmittel für automatische Fliesslötverfahren, das besonders geeignet ist für Anwendungen im Konsumelektronikbereich

| | |
|---|---|
| WW Gum Rosin | 2,1 |
| Isopropanol | 88,0 |
| Wasser | 6,0 |
| Alkylfluorierter Alkohol | 0,3 |
| Cyclohexan-Dicarbonsäure | 0,7 |
| Adipinsäure | 0,3 |
| Äpfelsäure | 2,3 |
| Tetramethylammoniumbromid | 0,3 |

3. Beispiel
Flüssigflussmittel für automatisches Fliesslötverfahren, dessen Rückstände mit Wasser nach dem Lötprozeß wieder entfernt werden können.

| | |
|---|---|
| Isopropanol | 60,0 |
| Modifizierter Mehrwertiger Alkohol | 19,0 |
| Wasser | 7,0 |
| Alkylfluorierter Alkohol | 0,3 |
| Glycol | 9,0 |
| Glutarsäure | 1,4 |
| Adipinsäure | 0,3 |
| Cyclhexan-Dicarbonsäure | 2,0 |

4. Beispiel
Füllung für Lotdrähte oder zur Umhüllung eines Lotformteiles

| | |
|---|---|
| Hydriertes Baumharz | 84,5 |
| Alkylfluorierter Alkohol | 0,3 |
| Cyclohexan-MonoCarbonsäure | 3,6 |
| Bersteinsäure | 1,4 |
| Stearinsäure | 10,0 |
| Naphtalindicarbonsäure | 0,2 |

Sämtliche Flussmittelmischungen entsprechen in Bezug auf Korrosion und Oberflächenwiderstand gemäss DIN 8516 und DIN 8527 allen Tests für halogenfreies Flussmittel.

## Patentansprüche

1. Verfahren zur Herstellung von elektrischen und elektronischen Komponenten, insbesondere von mit Bauelementen Bestückten gedruckten Schaltungen durch Weichlöten mittels Lötmaschinen unter Verwendung eines Weichlötflussmittels auf der Basis von organischen Carbonsäuren, dadurch gekennzeichnet, dass das Weichlötflussmittel im Lösemittelsystem als Bestandteil alkylfluorierte Alkohole enthält.

2. Verfahren nach Anspruck 1, gekennzeichnet dadurch, dass das Weichlötflussmittel aus drei Bestandteilen besteht und zwar aus einem a) Aktivator-, b) Träger- und c) Lösemittelsystem.

3. Verfahren nach Anspruch 2, gekennzeichnet dadurch, dass, in Gewichtsprozent bezogen auf die Gesamtzusammensetzung, das Akivatorsystem aus jeweils 0,01 - 25 %
a) Mindestens einer alicyclischen Mono-, Di- oder Policarbonsäure mit mindestens einem Kohlenstoffring bzw. deren Derivate,
b) mindestens einer gesättigten aliphatischen Monocarbonsäure mit 12 - 22 C-Atomen,
c) Mindestens einer gesättigten aliphatischen Dicarbonsäure mit 2 - 10 C-Atomen,
d) mindestens einer aliphatischten Ketocarbonsäure mit 3 - 5 C-Atomen,
e) mindestens einer aliphatischen Hydroxy-Carbonsäure mit 3 - 5 C-Atomen,
f) mindestens einer aromatischen Mono-, Di- oder Policarbonsäure mit mindestens einem Kohlenstoffring oder deren Derivate,
g) mindestens einem quartärem Ammoniumsalz mit 4 - 19 C-Atomen
besteht, wobei die Mengen von b), d), e), f) und g) auch 0 sein können.

4. Verfahren nach Anspruch 2, gekennzeichnet dadurch, dass, in Gewichtsprozent bezogen auf die Gesamtzusammensetzung, das Trägersystem entweder aus
a) 0,01 - 35 % einem natürlichen oder einem modifiziertem natürlichen Baumharz oder einem Kunstharz oder Mischungen hiervon und/oder aus
b) 0,01 - 90 % mehrwertige modifizierte Alkohole mit 2 - 16 C-Atomen und/oder deren Derivate
besteht.

5. Verfahren nach Anspruch 2, gekennzeichnet dadurch, dass, in Gewichtsprozent bezogen auf die Gesamtzusammensetzung, das Lösemittelsystem aus
a) 0,01 - 25 % Wasser
b) 0,01 - 4 % alkylfluorierter Alkohol der Strukturformel Rf-CH₂-CH₂-OH, wobei Rf einen Fluoralkylrest mit 6 - 16 C-Atomen darstellt (mindestens ein).
c) mindestens einem mit Wasser mischbaren Alkanol mit 2 - 5 C-Atomen oder deren Isomere, das als Rest zu jeweils 100 % verwendet wird,
besteht.

6. Verfahren nach Anspruch 1, gekennzeichnet dadurch, dass das Weichlötflussmittel einen zusätzlichen Gehalt an feinteiligem Lot aufweist.

7. Verfahren nach Anspruch 1, gekennzeichnet dadurch, das das Weichlötflussmittel zur Umhüllung von Lotformteilen oder als Füllung von Lotdrähten verwendet wird.

## Claims

1. A process for the manufacturing of electrical and electronic components, particularly printed circuits equipped with components, by soft soldering performed with soft soldering machines and the application of a soft soldering flux containing carboxylic acid and characterized by the fact that the soft soldering flux contains alcyl fluoric alcohols.

2. A process which in conformity with claim 1 is characterized by the fact that the soft soldering flux basically consists of three constituents, namely a) activator system, b) a vehicle system and c) a solvent system.

3. A process which in compliance with claim 2 is characterized by the fact that the activator system consists of the following components - each of which is present in the amount of 0.1 to 25 % by weight of the total composition consists of:
a) at least one alicyclic mono-,di- or polycarboxylic acid having at least one carbon ring, or their derivatives;
b) at least one aliphatic monocarboxylic acid having 12 to 22 carbon atoms;
c) at least one saturated aliphatic dicarboxylic acid;
d) at least one aliphatic ketocarboxylic acid having 3 to 5 carbon atoms:
e) at least one aliphatic hydroycarboxylic acid with 3 - 5 carbon atoms;
f) at least one aromatic mono-, di- or polycarboxylic acid containing at least respectively, one carbon ring or their derivatives;
g) at least one quatenary ammonium salt with 4 to 19 carbon atoms;
whereby the amounts for b), d), e), f) and g), however, may also equal 0.

4. A process which in conformity with claim 2, is characterized by the fact that the vehicle system ,in percent by weight of the total composition ,consists of the following:
a) 0.01 to 36 % of a natural resin from trees, or of a modified natural resin from trees or of a synthetic resin or a mixture thereof and/or
b) 0.01 to 90 % modified polyhydric alcohols with 2 to 16 carbon atoms or their derivatives.

5. A process which in compliance with claim 2, is characterized by the fact that the solvent system, in percent by weight of the total composition, consists of the following:
a) 0.01 to 25 % water
b) 0.01 to 4 % alcyl fluoric alcohol of the structural formula Rf-Ch2 - Ch2-OH, whereby Rf represents 6 to 16 carbon atoms. ( at least one ).
c) at least one alkanol with 2 to 5 carbon atoms and is miscible with water, or an isomere thereof, as a balance to 100 %

6. A process which in compliance with claim 1, is characterized by the fact that the soft soldering flux contains in addition finely divided solder.

7. A process which in compliance with claim 1, is characterized by the fact that the soft soldering flux can be used as a cover for solder moulds or as a filler in solder wire.

## Revendications

1. Procédé de fabrication de composants électriques et électroniques, particulièrement pour les circuits imprimés rentrant dans des éléments de construction réalisés par soudure à l'ètain au moyen de machines à braser avec utilisation d'un produit décapant pour soudure à l'étain ayant comme base des acides carboniques organiques caractérisés par le fait que le produit décapant contient dans le systeme de solvants des alcools alcoyle fluorés.

2. Procédé selon revendication 1, caractérisé par le fait que le produit décapant se compose de trois éléments dont a) un activateur, b) un support et c) und système de solvants.

3. Procédé selon revendication 2 carctérisé par le fait que, dans le pourcentage du oids par rapport à la composition totale, le système d'activateurs se compose respectivement de 0,01 - 25%
a) au moins d'un mono-acide, di-acide ou poly-acide carbonique alicyclique avec au moins un anneau de carbone ou ses dérivés,
b) au moins d'un acide monocarbonique saturé aliphatique avec 12 à 22 atomes de C,
c) au moins d'un acide di-carbonique saturé aliphatique avec 2 à 10 atomes de C,
d) au moins d'un acide carbonique aliphatique avec 3 à 5 atomes de C,
e) au moins d'un acide hydroxy-carbonique aliphatique avec avec 3 à 5 atomes de C,
f) au moins d'un mono-acide, di-acide ou poly-acide de carbone aromatique avec au moins un anneau de carbone ou ses dérivés,
g) au moins d'un sel d'ammonium quaternaire avec 4 à 9 atomes de C
tout en sachant que les quantités b), d), e), f) et g) peuvent aussi être égales à 0.

4. Procédé selon revendication 2, caractérisé par le fait que, dans le pourcentage du poids par rapport à la composition totale, le système de support se compose soit de
a) 0,01 - 35% d'une résine naturelle ou naturelle modifiée ou d'un résine artificielle ou d'un mélange des deux et/ou
b) 0,01 - 90% d'alcools modifiés polyvalents avec 2 à 16 atomes de C et/ou ses dèrivès.

5. Procédé selon revendication 2, caractérisé par le fait que, dans le pourcentage du poids par rapport à la composition totale, le système de solvants se compose de
a) 0,01 - 25% d'eau
b) 0,01 - 4% d'alcool alcoyle fluoré de la formule Rf-CH₂ -CH₂-OH, dont Rf représente un reste d'alcoyle fluoré avec 6 à 16 atomes de C (au moins un),
c) au moins un alkanol miscible à l'eau avec 2 à 5 atomes de C ou son isomère utilisé à 100% comme reste.

6. Procédé selon revendication 1, caractérisé par le fait que le produit décapant présente une teneur supplémentaire en fines particules d'étain à souder.

7. Procédé selon revendication 1, caractérisé par le fait que le produit décapant est utilisé pour enrober les pièces de brasage ou pur remplir les fils de brasage.
